Europäisches Patentamt

European Patent Office

Office européen des brevets

(11) Publication number: **0 191 109 B1**

(12) **EUROPEAN PATENT SPECIFICATION**

(45) Date of publication of patent specification: **25.03.92** (51) Int. Cl.⁵: **H02P 7/63**

(21) Application number: **85904138.6**

(22) Date of filing: **15.08.85**

(86) International application number:
**PCT/JP85/00452**

(87) International publication number:
**WO 86/01352 (27.02.86 86/05)**

(54) **PWM CONTROL SYSTEM FOR AC MOTORS.**

(30) Priority: **15.08.84 JP 170147/84**

(43) Date of publication of application:
**20.08.86 Bulletin 86/34**

(45) Publication of the grant of the patent:
**25.03.92 Bulletin 92/13**

(84) Designated Contracting States:
**DE FR GB**

(56) References cited:
**WO-A-84/01677**
**JP-A- 5 972 991**
**JP-A-56 103 971**

(73) Proprietor: **FANUC LTD.**
**3580, Shibokusa Aza-Komanba, Oshino-mura**
**Minamitsuru-gun, Yamanashi 401-05(JP)**

(72) Inventor: **FUJIOKA, Yoshiki**
**Greentown 3-30 1293-10, Tatsuno 3-chome**
**Higashiyamato-shi Tokyo 189(JP)**
Inventor: **KOUNO, Shinichi**
**Room 202, Wada-sou 6-21, Osakaue 4-chome**
**Hino-shi Tokyo 191(JP)**

(74) Representative: **Billington, Lawrence Emlyn et**
**al**
**HASELTINE LAKE & CO Hazlitt House 28**
**Southampton Buildings Chancery Lane**
**London WC2A 1AT(GB)**

## Description

The present invention relates to a PWM control system for an AC motor, and more particularly to an improvement in a PWM control system for an AC motor, which includes a PWM circuit composed of a plurality of transistors and providing transistor dead zones in pulse signals for turning on and off the transistors, so that two transistors connected in series with a power supply will be prevented from being energized simultaneously to short-circuit the power supply.

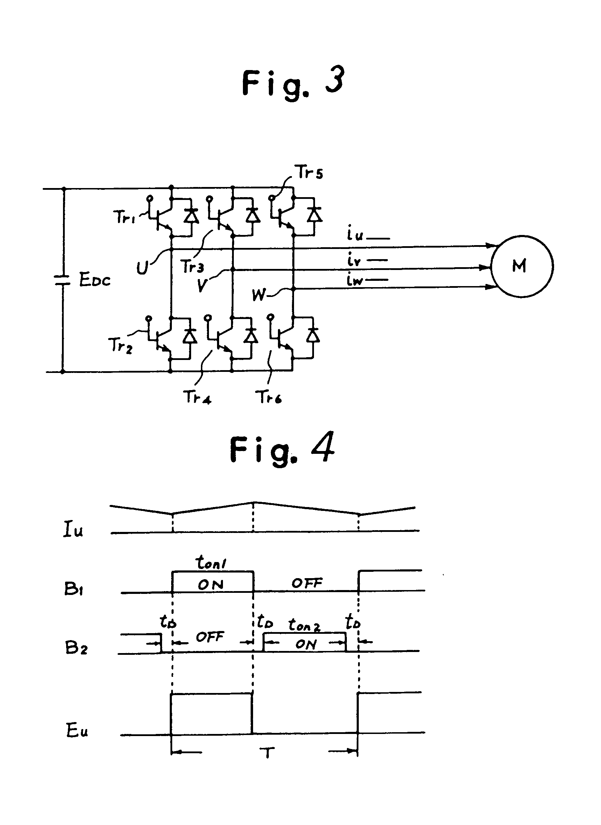

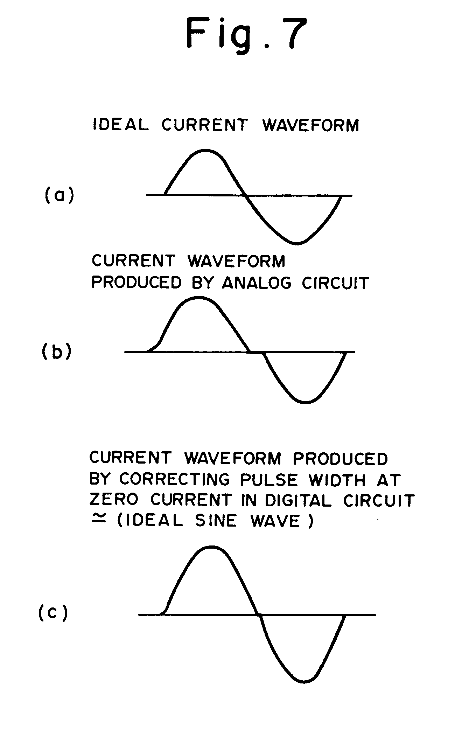

There has heretofore been known a PWM control apparatus for controlling an AC motor such as an induction motor with power transistors. In the known PWM control apparatus, as shown in Fig. 3, a current iu (or iv or iw) to flow into a motor M is picked up from the junction between a pair of transistors $Tr_1$, $Tr_2$ (or the junction between transistors $Tr_3$, $Tr_4$ or the junction between transistors $Tr_5$, $Tr_6$) connected in series with a DC power supply $E_{DC}$. The turn-on and turn-off times for the transistors in each phase are controlled by the pulse width of a gate pulse signal, and the waveform of the current flowing into the motor M can approach an ideal sine waveform as shown in Fig. 7(a) by smoothly varying the voltages at the junctions U, V, W between the transistors. However, when the transistors are turned on and turned off, the values of their rise time (tm), fall time (tf), and storage time (tstg) affect the circuit operation, failing to obtain the ideal waveforms of a current Iu and a voltage Eu as illustrated in Fig. 4. Since gate pulse signals $B_1$, $B_2$ are not applied as being of ideal rectangular waveforms as shown, dead zones ($t_D$) are provided between the gate pulses $B_1$ to be applied to an upper transistor and the gate pulse $B_2$ to be applied to a lower transistor, as shown in Fig. 4, in order to prevent the upper and lower transistors employed as switching elements from being short-circuited.

When the motor M is to be driven by feeding currents of sine waveforms dependent on the load of the motor, however, the currents will not be of sine waveforms as shown in Fig. 7(b) because of the dead zones ($t_D$) between the gate pulses $B_1$ to be applied to the upper transistor and the gate pulse $B_2$ to be applied to the lower transistor, causing the motor to produce torque ripples. This is because the voltages applied to the motor M abruptly change when the switching elements are simultaneously turned off at the time the current direction is reversed.

For example, the voltage $\overline{Eu}$ at the point U will be checked for the U phase of the motor M with reference to Figs. 4 through 6. Where the current Iu in Fig. 4 is positive, and assuming that one period of the gate pulse signal with its pulse width to be modulated is expressed by T and the turn-on times of the transistors $Tr_1$, $Tr_2$ are expressed by $ton_1$, $ton_2$, respectively, the average voltage $\overline{Eu}$ at the point U is given by the following equation:

$$\overline{Eu} = (ton_1/T) \times E_{DC} \qquad (1)$$

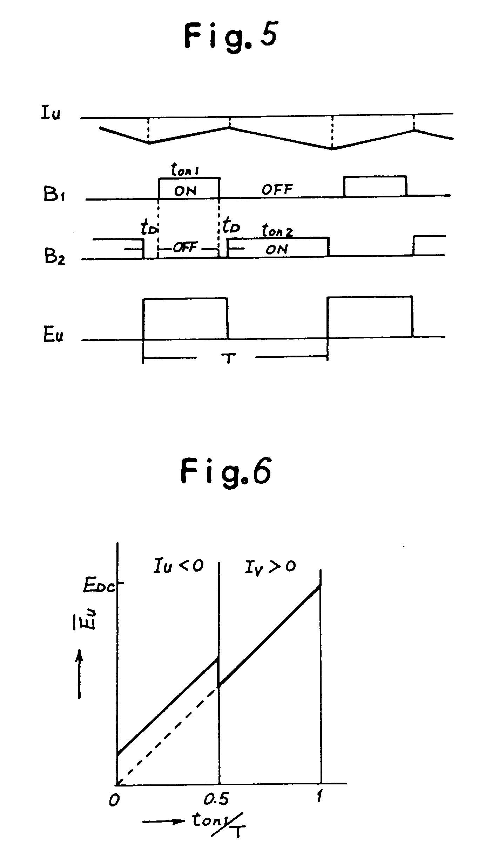

where $T = ton_1 + ton_2 + 2 \times t_D$. In case the current Iu is negative in Fig. 5, the voltage $E_{DC}$ appears at the point U as long as the transistor $Tr_2$ is turned off, and hence the average voltage $\overline{Eu}$ at the point U is expressed by the following equation:

$$\overline{Eu} = \{(T - ton_2)/T\} \times E_{DC} \qquad \cdots (2)$$
$$= (ton_1 + 2t_D)/T \times E_{DC} \qquad \cdots (2)'$$

Fig. 6 shows the manner in which the average voltage $\overline{Eu}$ at the point U varies, the graph having a horizontal axis representating $ton_1/T$ and a vertical axis representing $\overline{Eu}$. The current Iu is negative in the range of $ton_1/T < 0.5$ and is positive in the range of $ton_1/T > 0.5$. As is apparent from the equations (1) and (2)', when the turn-on time $ton_1$ of the gate pulse signal is continuously changed, a variation of $\Delta Eu = 2t_D \cdot E_{DC}/T$ occurs at the time $ton_1/T = 0.5$.

In view of the aforesaid drawback, the present invention proceeds from the idea of providing a PWM control system for controlling an AC motor stably with gate pulse signals having dead zones by discretely varying the pulse widths of the gate pulse signals at the time currents are zero in order to smoothly change the voltages applied to the motor when the directions of the currents vary.

WO-A-8401677 by the present applicant constitutes prior art. It discloses a PWM control system having the features of the preamble of accompanying claim 1. An arithmetic circuit for generating a current command adds a compensating signal, which is capable of offsetting a dead zone, thereby avoiding loss of motor torque.

According to the present invention, there is provided a PWM control system for controlling an AC motor by picking up an armature current for each phase from the junction between a pair of series-connected transistors that are turned on and off by gate pulse signals, said PWM control system comprising:

means for establishing a dead zone to turn off said pair of transistors simultaneously; and

means for varying the pulse width of the gate pulse signal for the transistors, characterised in that:

said means for varying the pulse width only operates at the time the current for driving the AC motor is zero, and is arranged to increase the pulse width of the gate pulse signal when the current for the AC motor changes from a negative value to a positive value, and to reduce the pulse width of the gate pulse signal when the current for the AC motor changes from a positive value to a negative value. Since, when the current goes from a negative value to a positive value across the zero point, the pulse width of the gate pulse signal for the transistor is increased, the average voltage $\overline{Eu}$ given by the foregoing equation (1) can be increased. Since, when the current goes from a positive value to a negative value across the zero point, the pulse width of the gate pulse signal for the transistor is reduced, the average voltage $\overline{Eu}$ given by the foregoing equation (2) can be reduced. Accordingly, the gap in the voltage as shown in Fig. 6 can be removed.

As described above, the abrupt change in the voltage which would otherwise be produced when the current value crosses the zero point is prevented by the gate pulse signals having dead zones. Therefore, the PWM control system of the present invention can stably operate an AC motor, particularly an induction motor.

Reference is made, by way of example, to the accompanying drawings in which:-

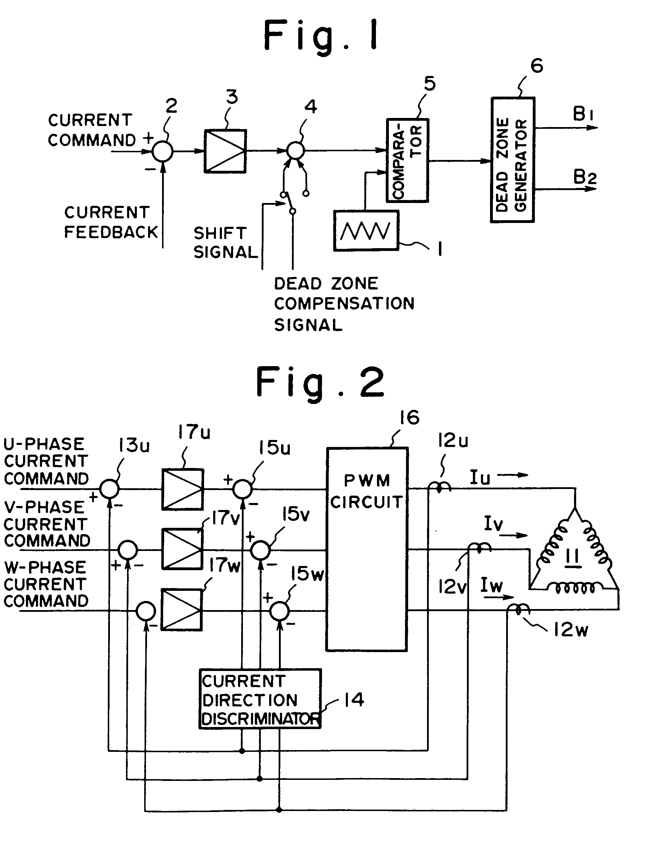

Fig. 1 is a block diagram showing an embodiment of the present invention; Fig. 2 is a block diagram of a PWM control system for a three-phase induction motor; Fig. 3 is a diagram showing an example of a PWM circuit composed of transistors; Fig. 4 is a timing chart illustrating the manner in which transistors are turned on and off when a current is positive; Fig. 5 is a timing chart illustrating the manner in which transistors are turned on and off when a current is negative; Fig. 6 is a graph showing the manner in which a voltage varies in a conventional system; Fig. 7(a) is a diagram showing an ideal sine current waveform; Fig. 7(b) is a diagram showing a sine current waveform in a conventional apparatus; and Fig. 7(c) is a diagram showing a sine current waveform in an apparatus according to the present invention.

An embodiment of the present invention will hereinafter be described with reference to the drawings.

Fig. 1 is a block diagram of a circuit arrangement for generating gate pulse signals $B_1$, $B_2$ for one phase. The circuit arrangement comprises a sawtooth wave generator 1, adder/subtractors 2, 4, an amplifier 3, a comparator 5, and a dead zone generator 6.

The positive input terminal of the adder/subtractor 2 is supplied with a current command signal of a sine waveform, and the negative input terminal thereof is supplied with a current feedback signal indicative of a detected armature current. A signal representing the difference between the current command and the current feedback is amplified by the amplifier 3 and applied as an error voltage signal to the adder/subtractor 4. The adder/subtractor 4 is supplied with a dead zone compensation signal which is to be shifted $+ \Delta$ or $- \Delta$. A shift signal is also applied which determines whether such a shift $\Delta$ is added to or subtracted from the error voltage signal dependent on the direction of the armature current. The error voltage signal which has been compensated for the dead zone is compared with a carrier from the sawtooth wave generator 1, which generates a pulse-width-modulated signal (PWM signal). The PWM signal is provided with a dead zone $t_D$ established by the dead zone generator 6 and converted thereby to a pair of gate pulse signals $B_1$, $B_2$ that are inverted with respect to each other.

Fig. 2 is a block diagram of an entire PWM control circuit for driving a three-phase motor M. Currents Iu, Iv, Iw supplied to armature windings 11 are detected by respective current detectors 12u, 12v, 12w, and fed back to comparators 13u, 13v, 13w for comparison with current command pulses for respective phases. Designated at 14 is a current direction discriminator which, when the directions of the currents are negative, inverts delay pulses $t_D$ for providing dead zones and applies the inverted delay pulses to comparators 15u, 15v, 15W. A PWM circuit 16 comprises a pair of series-connected transistors, for each phase, that are turned on and off by gate pulse signals. Denoted at 17u, 17v, 17w are pulse amplifiers for amplifying the respective gate pulse signals.

With the apparatus of the embodiment thus constructed, the dead zone compensation signal is added to or subtracted from the error voltage signal issued from the amplifier 3 dependent on the shift signal to shift a reference signal in a direction to increase the pulse width in the vicinity of the zero point of the current. Therefore, the voltage applied to the motor M is smoothly varied to obtain a current waveform which is a nearly ideal sine waveform as illustrated in Fig. 7 for thereby operating the motor M stably.

The shift signal may be generated at the time the current is zero by detecting the current command itself for each phase. In this case, it is necessary that the actual value of the armature current follow the current command.

The interval in which the voltage level is shifted to increase the pulse width corresponds to one driving period T of the PWM circuit. This interval may be increased to be equal to several periods for a gradual increase up to the original voltage level, so that the voltage can be controlled more stably.

The present invention is not limited to an embodiment relating to the control of an induction motor, but is also applicable to the control of a synchronous motor. These AC motors are useful as motors for driving the spindles of machine tools and as servomotors.

## Claims

1. A PWM control system for controlling an AC motor (M) by picking up an armature current (Iu, Iv, Iw) for each phase from the junction between a pair of series-connected transistors ($Tr_1$, $Tr_2$; $Tr_3$, $Tr_4$; $Tr_5$, $Tr_6$) that are turned on and off by gate pulse signals ($B_1$, $B_2$), said PWM control system comprising:
   means (16) for establishing a dead zone to turn off said pair of transistors simultaneously; and
   means (4) for varying the pulse width of the gate pulse signal for the transistors,
   characterised in that:
   said means (4) for varying the pulse width only operates at the time the current for driving the AC motor is zero and is arranged to increase the pulse width of the gate pulse signal when the current of the AC motor changes from a negative value to a positive value, and to reduce the pulse width of the gate pulse signal when the current of the AC motor changes from a positive value to a negative value.

2. A PWM control system as claimed in claim 1, wherein said means (4) for varying the pulse width comprises an adder/subtractor, arranged to receive an error voltage signal representing the difference between a current command and a current feedback, a dead zone compensation signal, and a shift signal which determines whether the dead zone compensation signal is to be added to or subtracted from the error voltage signal.

## Revendications

1. Système de commande à modulation par largeur d'impulsions pour commander un moteur (M) à courant alternatif (Iu, Iv, Iw) en prélevant un courant inducteur sur chaque phase depuis la jonction entre une paire de transistors connectés en série ($Tr_1$, $Tr_2$, $Tr_3$, $Tr_4$, $Tr_5$, $Tr_6$) qui sont mis en conduction ou bloqués par des signaux impulsionnels de grille ($B_1$, $B_2$), ledit système de commande à modulation de largeur d'impulsions comprenant :
   - des moyens (16) pour établir une zone morte pour bloquer ladite paire de transistors simultanément, et
   - des moyens (4) pour faire varier la largeur d'impulsion du signal impulsionnel de grille destiné aux transistors, caractérisé en ce que lesdits moyens (4) pour faire varier la largeur impulsionnelle fonctionnent seulement au moment où le courant d'alimentation du moteur à courant alternatif passe par zéro et sont disposés de façon à faire augmenter la largeur d'impulsion du signal impulsionnel de grille quand le courant destiné au moteur à courant alternatif varie d'une valeur négative vers une valeur positive, et pour réduire la largeur d'impulsion du signal impulsionnel de grille quand le courant destiné au moteur à courant alternatif varie d'une valeur positive à une valeur négative.

2. Système de commande PWM tel que revendiqué dans la revendication 1, dans lequel lesdits moyens (4) pour faire varier la largeur d'impulsions comportent un additionneur-soustracteur, monté de façon à recevoir un signal de tension d'erreur représentant la différence entre une commande en courant et une contre-réaction de courant, un signal de compensation de zone morte, et un signal de décalage qui détermine si le signal de compensation de zone morte doit être ajouté ou doit être soustrait du signal de tension d'erreur.

## Patentansprüche

1. Impulsbreitenmodulations-Steuersystem zum Steuern eines Wechselstrommotors (M) durch Aufnahme eines Ankerstromes (Iu, Iv, Iw) von der Verbindung zwischen einem Paar reihengeschalteter, durch Gateimpulssignale ein- und ausgeschalteter Transistoren ($Tr_1$, $Tr_2$; $Tr_3$, $Tr_4$; $Tr_5$, $Tr_6$) für jede Phase,

mit:

einer Einrichtung (16) zum Erzeugen einer toten Zone zum gleichzeitigen Ausschalten des Paares Transistoren und

einer Einrichtung (4) zum Variieren der Impulsbreite des Gateimpulssignals für die Transistoren,

**dadurch gekennzeichnet,** daß

die Einrichtung (4) zum Variieren der Impulsbreite nur zu der Zeit arbeitet, bei welcher der Antriebsstrom des Wechselstroms null ist, und eingerichtet ist, die Impulsbreite des Gateimpulssignals zu erhöhen, wenn der Strom des Wechselstrommotors von einem negativen Wert zu einem positiven Wert wechselt, und die Impulsbreite des Gateimpulssignals zu erniedrigen, wenn der Strom des Wechselstrommotors von einem positiven Wert zu einem negativen Wert wechselt.

2. Impulsbreitenmodulations-Steuersystem nach Anspruch 1, wobei die Einrichtung (4) zum Variieren der Impulsbreite einen Addierer/Subtrahierer aufweist, der eingerichtet ist, ein die Differenz zwischen einem Strombefehl und einer Stromrückkopplung repräsentierendes Fehlerspannungssignal, ein Totezonen-Kompensationssignal und ein Schaltsignal, welches bestimmt, ob das Totezonen-Kompensationssignal zum Fehlerspannungssignal zu addieren oder von Fehlerspannungssignal zu subtrahieren ist, zu empfangen.

# Fig. 1

# Fig. 2

# Fig. 3

# Fig. 4

# Fig. 5

# Fig. 6

# Fig. 7

IDEAL CURRENT WAVEFORM

(a)

CURRENT WAVEFORM
PRODUCED BY ANALOG CIRCUIT

(b)

CURRENT WAVEFORM PRODUCED
BY CORRECTING PULSE WIDTH AT
ZERO CURRENT IN DIGITAL CIRCUIT
$\simeq$ (IDEAL SINE WAVE )

(c)